Europäisches Patentamt

(19) European Patent Office

Office européen des brevets

(11) Publication number: **0 458 512 A2**

## (12) EUROPEAN PATENT APPLICATION

(21) Application number: **91304326.1**

(22) Date of filing: **14.05.91**

(51) Int. Cl.⁵: **G06F 12/08**

(30) Priority: **24.05.90 US 528301**

(43) Date of publication of application:
**27.11.91 Bulletin 91/48**

(84) Designated Contracting States:
**DE FR GB IT**

(71) Applicant: **AMERICAN TELEPHONE AND
TELEGRAPH COMPANY
550 Madison Avenue
New York, NY 10022 (US)**

(72) Inventor: **Lynch, John F., Jr.
29 Upper Drive
Summit, New Jersey 07901 (US)**

(74) Representative: **Watts, Christopher Malcolm
Kelway et al
AT&T (UK) LTD. AT&T Intellectual Property
Division 5 Mornington Road
Woodford Green Essex IG8 OTU (GB)**

(54) **Visible cache processing.**

(57) An approach that is tailored to a real time processing system receives a set of input samples at each given time interval (frame), and with an IC processor and a relatively small cache memory develops a set of output samples at the same frame interval. The programs that need to be executed in order to develop the output signals are divided into modules that are small enough to fit within the cache memory that is closely associated with the IC processor. All but one of the modules are kept on a host memory and are installed, in sequence, into the cache memory from which they are executed.

FIG. 1

## Background of the Invention

This invention relates to data processing devices, and specifically to a processing methodology for optimizing use of a cache memory associated with a real time signal processor.

"Microprocessor" is a term that is applied to a single semiconductor integrated circuit or "chip". It typically contains a central processing unit (CPU) which comprises an ALU (arithmetic logic unit), registers for data and addresses, an instruction register and a controller. All interconnected through bidirectional parallel bus for data, address and instructions. A "Microcomputer" is a term that is applied to a chip that contains a CPU and on-chip memory. Typically, the on-chip memory contains a portion that is read-only and a portion that is read/write. The read-only portion contains the basic instructions of the CPU (micro-instructions), and it is connected to the CPU through a different path than the read/write memory. The read/write memory is accessible outside the chip. For purposes of this disclosure, both types of computing ICs (microprocessors and microcomputers) are referred to as "IC processors".

IC processors can be grouped into two general classes: general-purpose processors and special-purpose processors. General purpose processors, such as the M68000 manufactured by Motorola, Inc., are designed to be programmable by the user to perform any of a wide range of tasks. Such processors are often used as the central processing unit in equipment such as personal computers. While offering good performance for a wide range of arithmetic and logical functions, such general-purpose microprocessors are not particularly adapted to very specific uses. In contrast, special-purpose processors are designed to provide performance improvements for specific, predetermined, arithmetic and logical functions which the designer intends for it to carry out. By knowing the primary function of the IC processor, the designer can structure the special-purpose processor in such a manner that the performance of the specific function greatly exceeds the performance of the same function by the general-purpose processor. Examples of applications where special-purpose processors excel typically involve a great deal of repetitive computations, such as digital filter applications, encoding and decoding of signals, etc.

Many digital signal processing applications require real-time computations. That weighs the balance in favor of the special processor approaches because their greater speed permits the real-time processing to be more easily and more assuredly realized. What is meant by "real-time" processing is the realization that data arrives at a given rate, and that it must be handled (i.e., the necessary computations must be executed) in a sufficiently expeditious manner to prevent the forming of a computational bottle neck.

The processing speed of modem IC processors is quite high, and that characterization includes accesses to the memory that is within the chip. Simply put, as long as signals stay "on chip", the processing speed is high. As soon as signals must pass through the chip interface and travel to another location, there is a loss of speed. One reason for this is that the signals must travel substantially longer distances (orders of magnitude increases), and encounter IR drops and low pass filtering action due to the much larger capacitances of the signal paths. Another reason for the loss of speed is that designers of the chip; having lost control of the load that must be driven by the signals coming off the chip, must include "line drivers" at the output of the chip, and those drivers are larger and slower.

On the other hand, the memory that may be supplied on a chip is rather limited because the CPU occupies a substantial amount of space and the overall area of a chip is bounded by yield considerations (the larger the chip area, the lower the yield). Consequently, when speed of computation is paramount, special-purpose processors are favored, because the memory necessary for storing the program can be dispensed with. Still, the more versatile general-purpose IC is often preferred. It is more ubiquitous and generally less expensive than special-purpose IC processors.

In a slightly different environment, where computers deal with very large magnetic storage means (such as hard disks and tape) and with smaller (relatively) semiconductor memories, and approach known as caching has been employed. In a basic cache arrangement, the computer executes specified programs by fetching the called-for programs from the hard disk, fetching the relevant data from the hard disk (if data is called for), installing the programs and the data in the semiconductor memory, and proceeding to perform the required computations. Mostly, the programs are not so large that they cannot be installed within the memory in their entirety. When they are, the programs are divided into routines that are small enough to fit within the available space. This "insufficient memory" condition occurs much more often, however, with data. In some applications, such as in large data base applications, the data is rather voluminous. This condition occurs with higher frequency in personal computers, than with "mainframe" computers.

When the fast memory associated with the CPU is too small to keep all of the necessary data, the caching arrangement keeps track of what is in the cache and what is not. When a need arises to access data that it is not in the fast memory, the computer accesses the slow disk and fetches the necessary information.

While fetching data from, and storing data in, the slow memory is time consuming (because of the inherent low speed of the memory), it is even more time consuming to go through the process of determining that the data is not available in the fast memory, establishing communications with the slow memory (perhaps requiring synchronization), actually doing the data transfers, and resuming work with the fast memory. Because of that, a number of techniques were developed that aim to reduce the number of data swaps between the slow memory and the fast memory. All of them aim to increase the "hit" ratio, or the probability of a "hit", which means the proportion of instances when a piece of information (data or instruction) is available at the fast memory when it is needed. There are basically four placement policies: direct, fully associative, set associative, and sector mappings. These are described in detail, for example, in Computer Architecture and Parallel Processing, by Hwang and Briggs, McGraw-Hill Book Company, 1984, sec. 2.4.2, pp 102 et seq.

Briefly, in "direct mapping" both the slow and the fast memories are divided into blocks. The slow memory has many more blocks and, to accommodate that, a number of slow memory blocks are mapped to each fast memory block. When swapping, a block from the slow memory is written into a corresponding block in the fast memory. In this manner, diverse locations of the slow memory can reside concurrently in the fast memory, and as long as accesses are to data that is spatially "local", the number of swaps is reasonable. This technique becomes inefficient, however, when two or more slow memory blocks, used alternately, happen to map onto the same block in the fast memory.

In the "associative" approach, any slow memory block can be stored in any of the fast memory blocks. To determine whether a desired data is in the fast memory, the entire memory must be perused. Although fully associative cache eliminates block contention, it encounters longer access time because of the associative search.

The "set associative" approach is a compromise between the "direct" approach and the "fully associative" approach. The fast memory is divided into fewer but larger blocks. There is direct mapping between the larger blocks, while within each block the allocation is fully associative.

In the "sector mapping" scheme, both the slow memory and the fast memory are divided into sectors, with each composed of a number of blocks. The memory requests are for blocks, and if a request is made for a block that is not in the fast memory, then the sector to which the block belongs in brought into a buffer and from the buffer the block that caused the fault is brought into the fast memory.

None of these approaches are truly useful to real time processing, because the swapping times are not known deterministically.

It is the object of this invention to develop a caching approach for "on-chip" memory that would allow real time processing applications to reap the versatility benefits of general-purpose IC processors.

## Summary of the Invention

This and other objects and advantages are realized with an approach that is tailored to a real time processing system which receives a set of input samples at each given time interval (frame), and which is called to develop a set of output samples at the same frame interval. The programs that need to be executed in order to develop the output signals are divided into modules that are small enough to fit within the small, high speed, cache memory that is closely associated with the processor. All but one of the modules are kept on a host memory and are installed, in sequence, into the cache memory from which they are executed.

## Brief Description of the Drawing

FIG. 1 presents a block diagram that is suitable for carrying out processing in accordance with the principles of this invention;

FIG. 2 depicts the processing flow of program modules following the principles of this invention; and

FIG. 3 presents an answering machine example of processing performed in accordance with the principles of this invention.

## Detailed Description

Given a combination comprising a microprocessor and a fast but small cache memory, the goal is to operate the combination in the most efficient manner. More particularly, the goal is to operate the combination in a manner that allows a maximum speed in performing computational tasks. That translates to an effort to reduce the number of information swaps between the cache memory and some larger but slower host memory. In a "real time" application there is the additional goal or, rather, the requirement, that the data applied to the processor and the computations that need to be performed by the processor can be accomplished in the allotted time.

Even when it is known that the computations can be performed within the allotted time, other constraints exist that affect the capability to perform those computations. Specifically, the constraints of memory availability must be taken into account, and those constraints depend on the amount of data that is applied to the combination, as well as on the number and nature of the computations that need to be performed. For example, it is possible that the amount of data is substantial while the computations for each data item are few. In such a circumstance, it is possible that the cache memory is simply not large enough to keep all the data, or that the cache is large enough but there is insufficient memory left for storing any substantial portion of the program. On the other hand, it is possible that the amount of data is fairly small and it can easily fit within the cache memory, but the programs which specify the necessary computations are too large to fit within the cache. In either event, a modularizing of the data and/or the programs is necessary, together with a division of the memory space within the cache.

The division between the portion of the cache memory that is chosen for storing data and the portion of the cache memory that is chosen for storing programs is controlled by the programmer. It need not be fixed but, rather, it should be selected to minimize swapping of data between the cache memory and the slow memory. In some cases, that may mean that the best choice is to store all of the data in the cache, and swap in only program portions. Ideally in such cases, the overall program can be separated into logical modules that are small enough to fit within the memory space that is left after the data is installed. "Logical modules", in this context, are modules that complete an entire logical process and result in a relatively small set of results that needs to be forwarded to the next module. On the other hand, dealing with logical modules is not an absolute requirement. In accordance with the principles of this invention, a program can be arbitrarily separated into blocks of any chosen size. As long as the capability exists to store the state of the program at the end of the module, prior to it being replaced by the next program module, it is possible to operate with any block of program code that fits within the available space. The memory utilization is optimized with this technique, but the programming effort is somewhat greater. Of course, it would be unwise to break a program that contains a short loop because that would cause excessive swapping of program modules. Long loops, however, may not present a swapping problem.

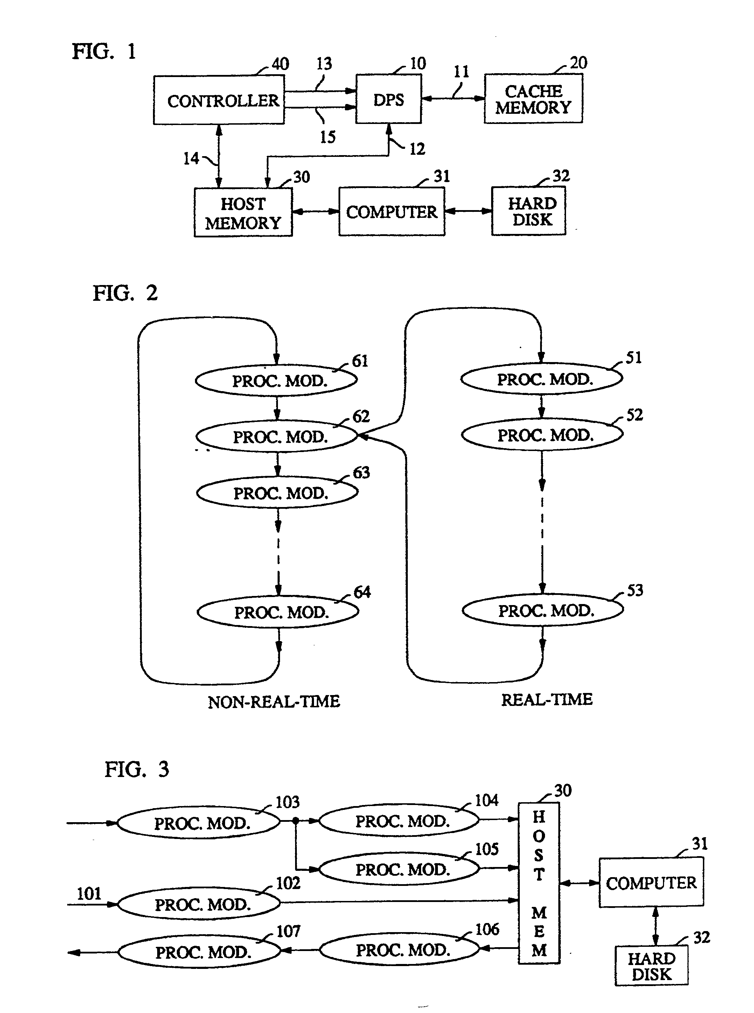

FIG. 1 presents a block diagram of one structure that embodies the principles of this invention. In comprises processor 10 that is connected to cache memory 20 through bus 11 and to host memory 30 through bus 12. Although FIG. 1 shows two buses (11 and 12), it should be understood that a single bus can also be employed.

Also connected to processor 10 is controller 40. Controller 40 may receive data signals from a real time data source. It either receives a frame indication signal from such a source or it a frame counter that counts the incoming signals and develops a frame mark signal at the occurrence of every $N^{th}$ incoming signal. The frame mark signal forms an interrupt signal that is sent to processor 10 on line 13. There may be more than one interrupt line that connects controller 40 to processor 10, with each interrupt line being responsive to different conditions of the signals passing between the controller and the environment outside it. Alternatively, the frame counter (or at least the memory portion thereof) can reside in a memory location within host memory 30 or within cache memory 20, with the counting done by processor 10. However, that implies that processor 10 has the resources (available time) to perform the counting function.

When the data is voluminous enough, controller 40 may apply the incoming data to host memory 30. Bus 14 is provided for that purpose. In other circumstances, when the cache memory has sufficient space and the process of writing the data directly to cache memory 20 is not too time consuming, then the data can be stored in cache memory 20 directly. Bus 15 is provided for that purpose.

The program modules to be executed by processor 10 are pre-stored in host memory 30. In operation, when controller 40 applies an interrupt signal to processor 10, an initialization program is called. It causes processor 10 to store its current program state in host memory 30 and to install within the cache memory the first program module. In applications where the data has been stored by controller 40 in host memory 30, the initialization program also causes processor 10 to retrieve from memory 30 the first data segment, or all of the data, of the frame, as appropriate (based on the size of the data block and on the assigned space in the cache).

As an aside, "current program state", refers to the subset of all data items that are within processor 10 which are necessary for a continuation of the current program at some later time. That may include the input data items, the heretofore developed output data items, the program counter state, the state of various registers, the values of various computed parameters, temporary results, etc.

FIG. 2 depicts the processing flow within processor 10. Blocks 51, 52, 53 represent the program modules that must be executed and applied to the input data signals of a frame. This is the "real time" set of tasks that are assigned to processor 10. After the initial module (51) is executed, its relevant program state is stored in host memory 30, and module 52 is loaded into the memory. When module 52 requires data that is not present in cache memory 20, then it too is loaded into cache memory 20. The "relevant" program state typically contains less information the complete program state. When a module has completed its task, for example, the input data may not need to be stored in host 10 (either because the host already has that data or because this data is not needed by any of the succeeding modules) the program counter state and the state of all other registers are no longer material, and neither are the values of various parameters or temporary results. Also, the input data used by module 51 is often the very same data that is needed by module 52 and, even more often, the output data developed by module 51 forms part (or all) of the input data needed by module 52.

Dashed line 54 represents the occurence of an interrupt signal that marks the beginning of a signal frame. It emanates from block 62. Block 62 is a program module. It is one program module in a loop of program modules 61, 62, 63, 64. This loop of program modules represents tasks that are assigned to processor 10 to be performed as time permits. Dashed line 55 represents the completion of the last assigned task in the set of real time computational tasks of processor 10, and the return to the processing of module 62. In other words, when, in the course of executing module 62 an interrupt signal is applied to processor 10, the program state of module 62 is stored in host memory 30 and the real time modules are executed. When the last real time module completes execution, control returns to module 62, the relevant program state of module 62 is retrieved from host memory 30, and its processing resumes. When that processing ends, the next module (63) is installed in cache memory 20 and its processing begins.

Although FIG. 2 shows the interrupt to occur when module 62 is executed, it should be understood that the interrupt could occur during the execution of any of the module in the non-real time loop of program modules. FIG. 2 also suggests that the interrupt causes the (almost) immediate cessation of module 62. A programmer may choose, however, to allow module 62 to terminate its operation and to begin execution of the real time set of program modules when module 62 ends its processing. This approach reduces the amount of data that needs to be stored in host memory 30. However, this approach can be used only when the modules in the non-real time set are all short enough to be fully executed in the time slot that is available to the real-time set of modules.

Returning to FIG. 1, it should be noted that host memory 30 need not be a unitary device. It may form, for example, part of a combination that includes a number of memories, and those memories do not need to be of the same variety. Further, the combination may include processing power of its own. Thus, block 30 may be a semiconductor memory that is connected to a computer 31, and computer 31 may be connected to a bulk memory 32 (e.g. hard disk). Such an arrangement permits computer 31 to be the primary controller.

Many applications exist where users would like to have their primary computer perform real-time processing, but they cannot afford to spare the processing time for any but the most essential tasks. One example of a common real-time task that is performed by computers is the data communications function of modems, but even there, the modem equipment (or chip, i.e. a special-purpose IC processor) does most of the modem processing of sampling the analyzing the incoming signals and determining when the analog signals represent a logic 1 and when they represent a logic 0.

With a structure not unlike that of FIG. 1 and the method of operation as disclosed herein, many real-time processing applications can be realized even when computer 31 is a relatively small computer, such as is commonly referred to as a PC. For example, typical PCs interface with the user through the keyboard or the mouse as the primary input device, and through the CRT display as the primary output device. One possibility is to replace this interface with an audio link. That is, the computer can accept input that is spoken to the computer, and the computer can provide an output by converting text to synthesized speech. Other real-time functions, such as environment control (e.g., heat, light, etc.) can easily be added to the computer. In all of these applications, the real-time processing can take place in microprocessor 10 in conjunction with the cache memory as disclosed herein.

FIG. 3 presents an example of the FIG. 1 arrangement employed in an answering machine application. When limited solely to that application, the computer "kicks in" only when a ringing signal occurs more that a preselected number of times within a given time interval (suggesting that there is no one to answer the phone call). When used in this manner, the computer merely replaces the conventional answering machine. Actually, the application can be extended to encompass data transfers with the computer, as well as data transfers where the computer is merely the first link in a chain. An example of the latter is using the computer as an interface to a facsimile module. The facsimile module may have its own processor, or it may rely for its processing on the FIG. 1 arrangement, reserving for itself only the conversion of digital signals to images on paper or the like.

As indicated above, in the answering machine application the computer is tied to a telephone line. A signal on line 101 emanates from a ring detector circuit that is not shown in FIG. 3. Although the ring detector function can be incorporated in the FIG. 3 processing, it is recognized that the actual voltage levels of the ringing signal are too high for direct interface with conventional computers, and also too high for controller 40 of FIG. 1, unless a circuit is included that has special, high voltage, transistors (or ICs) and voltage conversion means. Once such a circuit is provided, ring detection can be incorporated within it. Assuming that to be the case, the signal from the ring detector, which is captured by controller 40, causes a signal to be sent to processor 10. In response to this signal, represented by line 101 in FIG. 3, module 102 executed by processor 10 and it develops an output signal that is stored in host memory 30. Computer 31, observing that the contents of a specified location are changed, marks this as a signal that a call is incoming and performs some initializing actions. This includes transferring the call incoming programs from disk 32 to host memory 30, etc.

After the initializing, processor 10 is ready to receive and process input signals. That is, an interrupt appearing at this time causes the process of module 103 to be carried out. Module 103 is a sample rate converter. It accepts sets of input signals from cache memory 20 and reduces the sample rate of those signals (e.g. by decimation) from 48KHZ to 8KHZ. As disclosed above, those signals are placed in memory 20 directly from the "outside", which in this case is the telephone line (via controller 40), or they may come from host memory 30 where they have been stored by controller 40.

The signals developed by the processing of module 103 are the input signals of module 104. It makes sense, therefore, to undertake module 104 after module 103 is completed because that obviates the need to transfer the results of module 103 from cache memory 20 to host memory 30, and the need to transfer the input data needed for module 104 from host memory 30 to cache memory 20. Module 104 is a speech coder module. It performs various algorithms that accept the 8 KHZ data and compress the data in preparation for storage. The results are stored in host memory 32, together with an indication that data is to be stored. Upon receipt of this indication, the computer (31) stores the compressed data in the hard disk (32).

In some applications, the listener is requested by the answering machine to push a button on the listener's dialing pad, generating a multi-frequency signal. This signal communicates a listener's desire for the system to take a particular action and, of course, this signal must be decoded. In FIG. 3, this is done by module 105. It may be noted that the input signals to module 105 are the output signals of module 103. Consequently, after module 104 completes its processing, the previously developed signals of module 103 need to be accessed from host memory 30. In applications that employ module 105, module 103 cannot end without storing its results in host memory 30. Module 105 comprises algorithms that perform a conventional filtering action for detecting multi-frequencies.

Answering machines provide reconstituted speech to the listener. This may be speech that was recorded on a magnetic medium, or it may be synthesized speech. In any event, a real-time speech signal must be developed. In FIG. 3, this is accomplished with two modules. Module 106 receives signals from host memory 32 which correspond to the speech to be generated. Those signals may in fact emanate from hard disk 32. Module 106 receives compressed signals and expands them in accordance with algorithms that are basically the inverse of the algorithms carried out by module 104. The signals developed by module 106 form the input signals of module 107, which is a sample rate converter module that performs the inverse function of module 103. The output signals of module 107 are applied to controller 40 and, in turn, are applied to the telephone line.

## Claims

1. A processing system including a processor, a first memory connected to said processor, and a second memory connected to said processor, the second memory being smaller and faster than said first memory, where said processor is responsive to input signals that are applied to said processing system in frames, at a given frame rate, with a fixed number of input data signals in each of said frames, COMPRISING:

   first means for controlling execution of a set of program modules on said processor with the arrival of each frame of said input data signals; and

   second means, responsive to said first means, for loading program modules from said first memory into said second memory, where each of said modules includes a collection of instructions that is short enough to fit within said second memory and concurrently accommodate the storage of said program modules and of data.

2. The system of claim 1 wherein said data stored in said second memory is transitory data that is developed by the program module residing in said second memory in the course of execution of said program module.

3. The system of claim 1 wherein said data stored in said second memory includes transitory data that is developed by the program module residing in said second memory in the course of execution of said program module and output data that forms the result of execution of said program module.

4. The system of claim 1 wherein said data stored in said second memory includes transitory data that is developed by the program module residing in said second memory in the course of execution of said program module and input data signals that are used in the course of execution of said program module.

5. The system of claim 4, further comprising third means, responsive to said first means, for loading said input data signals that are used in the course of execution of said program module into said second memory.

6. The system of claim 4, further comprising third means, responsive to said first means, for loading said input data signals applied to said system into said first memory and for loading said input data signals that are used in the course of execution of said program module into said second memory from said first memory.

7. The system of claim 4, further comprising third means, responsive to said first means, for loading said input data signals applied to said system directly into said second memory.

8. The system of claim 1 wherein said data stored in said second memory includes transitory data that is developed by the program module residing in said second memory in the course of execution of said program module input data that is used in the course of execution of said program module and output data that forms the result of execution of said program module.

9. In a processing system including a processor, a first memory connected to said processor, and a second memory connected to said processor, the second memory being smaller and faster than said first memory, where said processor is responsive to input signals that are applied to said processing system in frames, at a given frame rate, with a fixed number of input data signals in each of said frames, COMPRISING:

first means for executing a first set of program modules on said processor with the arrival of each frame of said input data signals;

second means, responsive to said first means, for loading said input data signals into said second memory;

third means, responsive to said first means, for loading program modules from said first memory into said second memory, where each of said modules is short enough to fit within said second memory and concurrently accommodate the storage of said input data signals, of output data signals, of program variables, and of transitory data, and said first set of program modules has an overall processing time that is less than the time between frame arrivals; and

fourth means for executing a program module from a second set of program modules within the time remaining between the time when said first means completes execution of said first set of program modules and the arrival of a new frame of input data signals.

10. In a processing system including a processor, a first memory connected to said processor, and a second memory connected to said processor, the second memory being smaller and faster than said first memory, where said processor is responsive to input signals that are applied to said processing system in frames, at a given frame rate, with a fixed number of input data signals in each of said frames, COMPRISING:

first means for executing a first set of program modules on said processor upon the arrival of each frame of said input data signals, and for executing program modules from a second set of program modules following the execution of said first set of program modules, where

each of said modules in said first set is short enough to fit within said second memory and to accommodate the storage of said input data signals, of output data signals, of program variables, and of transitory data, and is further characterized in that said first set of program modules has an overall processing time that is less than the time between frame arrivals, and

each of said modules in said second set is short enough to fit within said second memory and to accommodate the storage of data signals, of output data signals, of program variables and states, and of transitory data;

second means, responsive to said first means, for loading said input data signals into said second memory upon arrival of said frame of input data signals, and, in the course of execution of a program module from said second set, for loading data signals, program variables and program states from said first memory into said second memory;

third means, responsive to said first means, for loading from said first memory into said second memory, program modules of said first set of modules, program modules of said second set of modules, program parameters and program states; and

fourth means for transmitting said output data signals out of said second memory, and for transferring from said second memory into said first memory, program states.

11. In a processing system including a processor, a first memory connected to said processor, and a second memory connected to said processor, the second memory being smaller and faster than said first memory, where said processor is responsive to input signals that are applied to said processing system in frames, at a given frame rate, with a fixed number of input data signals in each of said frames, a method for processing input signals stored in said first memory comprising the steps of:

loading a sequence of program modules from said first memory into said second memory into said second memory, where each of said modules includes a collection of instructions that is short enough to fit within said second memory and concurrently accommodate the storage of data signals; and

executing said sequence of program modules on said processor with the arrival of each frame of said input data signals.

12. The method of claim 11 further comprising the steps of:

loading at least a portion said input data signals of a frame into said second memory, for use in said step of executing, and

loading into said first memory signals that result from said executing.

FIG. 1

CONTROLLER 40 — 13 → DPS 10 — 11 → CACHE MEMORY 20

14 — 15 — 12

HOST MEMORY 30 ↔ COMPUTER 31 ↔ HARD DISK 32

FIG. 2

PROC. MOD. 61
PROC. MOD. 62
PROC. MOD. 63
PROC. MOD. 64

PROC. MOD. 51
PROC. MOD. 52
PROC. MOD. 53

NON-REAL-TIME              REAL-TIME

FIG. 3

PROC. MOD. 103 → PROC. MOD. 104 → HOST MEM 30
PROC. MOD. 105
101 → PROC. MOD. 102
107 PROC. MOD. ← 106 PROC. MOD.
COMPUTER 31
HARD DISK 32